# EUROPÄISCHE PATENTSCHRIFT

(11) **EP 0 402 831 B1**
(45) Veröffentlichungstag und Bekanntmachung des Hinweises auf die Patenterteilung: **25.08.1993**
(21) Anmeldenummer: 90111009.8
(22) Anmeldetag: 11.06.1990
(51) Int. Cl.: B23K 26/00

(54) **Verfahren zur Führung des Temperaturverlaufes an Lötstellen beim Laserlöten**
Method of guiding the temperature course at soldering points by laser soldering
Procédé pour suivre la variation de température à des points de soudage lors du soudage par laser

(30) Priorität: 15.06.1989 DE 3919619
(43) Veröffentlichungstag der Anmeldung: 19.12.1990
(73) Patentinhaber: Siemens Nixdorf Informationssysteme Aktiengesellschaft, 33102 Paderborn (DE)
(72) Erfinder: Koch, Volker-Ekkehart, Dr.-Ing., D-8024 Oberhaching (DE); Diegelmann, Michael, Dr., D-8000 München 71 (DE)
(74) Vertreter: Fuchs, Franz-Josef, Dr.-Ing.

(56) Entgegenhaltungen:
- EP-B- 0 036 980
- DE-A- 3 701 013

## Beschreibung

Die Erfindung betrifft ein Verfahren zur Führung des Temperaturverlaufes an Lötstellen beim Laserlöten mittels der Erfassung eines bekannten Temperaturfixpunktes. Ein solches Verfahren ist aus der DE-A-37 01 013 bekannt.

Ein grundsätzliches Problem beim Laserlöten ist die Kontrolle der Energieeinkopplung und der Aufheizung von Lötstellen auf eine bestimmte Temperatur. Infolge starker Streuungen des Absorptionskoeffizienten von Lötstelle zu Lötstelle, unterschiedlicher Lotvoluminia und unterschiedlicher Oberflächenbeschaffenheiten ist beim Laserlöten die bloße Vorgabe der Laserleistung in den meisten Fällen nicht ausreichend. Derartige Verfahrensweisen führen in Extremfällen zu kalten Lötstellen oder zu Zerstörungen am Werkstück, auf dem sich die Lötstellen befinden.

Zur Sicherstellung einer gleichbleibenden Qualität von Laserlötverbindungen müssen vor allem die durch unterschiedlichen Oxidationsgrad der Oberfläche oder durch unterschiedliche Verschmutzung bedingten Unterschiede im Absorptionsvermögen durch individuelle Anpassung an jedes einzelne Werkstück bzw. jede einzelne Lötstelle ausgeglichen werden.

Meßverfahren, die im wesentlichen durch Wärmeleitung die aktuelle Lötstellentemperatur messen, sind für Laserlötverfahren zu träge.

In der DE-PS 37 01 013 wird ein Verfahren zur Temperaturbestimmung unter Einsatz eines Infrarotstrahlungspyrometers beschrieben. Die Infrarotemission der Lötstelle wird über das Infrarotstrahlungspyrometer aufgenommen und als relatives Maß für die Lötstellentemperatur ausgewertet. Hierbei wird das Phänomen ausgenutzt, daß bei Erwärmung der Lötstelle mittels konstanter Laserleistung der weitgehend zeitlineare Anstieg der Temperatur an der Lötstelle beim Erreichen des Lotschmelzpunktes einen Haltepunkt aufweist. Die Zeit des Aufschmelzens entspricht der Länge des Haltepunktes und ist die Zeit, die erforderlich ist, um dem Lot die latente Wärme, die Schmelzwärme, zuzuführen. Diese Diskontinuität im zeitlichen Anstieg des der Lötstellentemperatur entsprechenden Infrarotsignales wird in der erwähnten Patentschrift als Kennzeichen für das Erreichen der Schmelztemperatur des Lotes ausgewertet. Eine absolute Temperaturmessung geschieht hierbei nicht.
Dieses Verfahren weist meßtechnische Unsicherheiten auf. Die Reproduzierbarkeit des gemessenen Infrarotsignales ist im wesentlichen nur dann gegeben, wenn sämtliche auf einem Werkstück befindlichen Lötstellen annähernd gleich aufgebaut und gleich groß sind. Zudem müssen die Lötstellen eine bestimmte Mindestgröße aufweisen, da sonst der Haltepunkt im Temperatur-Zeit-Verlauf beim Aufschmelzen des Lotes nicht genügend ausgeprägt ist und nicht zuverlässig detektiert werden kann.

Der Erfindung liegt die Aufgabe zugrunde, ein Verfahren zum Laserlöten bereitzustellen, daß für viele unterschiedlich gestaltete Lötstellen gleichmäßig gute und reproduzierbare Laserlötverbindungen ermöglicht, ohne daß die unterschiedlichen Lotvolumina und die unterschiedlichen Oberflächenbeschaffenheiten das Lötverfahren nachteilig beeinflussen.

Die Lösung dieser Aufgabe wird durch die Merkmale des Anspruches 1 wiedergegeben.

Der Erfindung liegt die Erkenntnis zugrunde, daß der Einsatz einer Sensorsubstanz, die eine genau eingestellte Curie-Temperatur aufweist, in einfacher Weise einen definierten und für das Verfahren festliegenden Temperaturfixpunkt für das Aufheizen einer Lötstelle beim Laserlöten liefert. Dabei ist es notwendig, daß die Sensorsubstanz entweder direkt zum Werkstück gehört, auf dem sich die Lötstellen befinden oder in gutem thermischem Kontakt mit der aktuellen Lötstelle steht. Dies gewährleistet, daß Sensorsubstanz und Lötstelle annähernd die gleiche Temperatur aufweisen. Die Detektion des Überschreitens der Curie-Temperatur der Sensorsubstanz erfolgt mittels eines Sensors zur Erkennung des damit verbundenen Überganges zwischen Ferro- und Para-Magnetismus. Zweckmäßigerweise liegt die Curie-Temperatur der Sensorsubstanz im Bereich zwischen der Schmelztemperatur und der Arbeitstemperatur des Lotes. Die Curie-Temperatur kann auch bei der Arbeitstemperatur liegen, auf die die Lötstelle während des Verfahrens erhitzt werden muß. Die Curie-Temperatur der Sensorsubstanz ist durch die Bildung genau abgestimmter Stoffgemische auf eine bestimmte Temperatur einstellbar. Diese entspricht einem genau definierten Temperaturwert, dem Temperaturfixpunkt, dessen Erreichen exakt detektiert werden kann.

Eine vorteilhafte Ausgestaltung der Erfindung sieht vor, daß eine bestimmte Arbeitstemperatur an der Lötstelle, die höher, als die Curie-Temperatur der Sensorsubstanz ist, durch Nachlieferung einer empirisch festgelegten Energiemenge nach dem Überschreiten der Curie-Temperatur erreicht wird. Diese Verfahrensweise kann sich auf Erfahrungswerte stützen und benötigt keinen größeren apparativen Aufwand.

Eine weitere Verfeinerung der Temperaturführung des Lotes bis zu einer bestimmten Arbeitstemperatur besteht darin, daß die vom Laser abgegebene Energiemenge bis zum Erreichen der Curie-Temperatur der Sensorsubstanz ermittelt wird und eine daraus abgeleitete Energiemenge anschließend nachgeliefert wird.

Dies kann beispielsweise über eine Verhältnisrechnung geschehen, wobei Erfahrungswerte mit einfließen können. Mit dieser Steuerung ist die Temperaturführung an der Lötstelle bis zum Erreichen einer bestimmten Arbeitstemperatur ohne hohen apparativen Aufwand und für viele Anwendungsfälle ausreichend präzise.

Es ist vorteilhaft, die Curie-Temperatur der Sensorsubstanz so auszuwählen, daß sie der Arbeitstemperatur des Lötverfahrens entspricht. Hierbei kann bei Erreichen der Arbeitstemperatur durch einen entsprechenden Regelkreis dieser Temperaturwert anschließend für eine bestimmte Zeit gehalten werden. Hierbei wirkt die Sensorsubstanz als Schalter, mittels dem beispielsweise eine Zwei- oder Dreipunktregelung durchgeführt werden kann.

Der Erfindung liegt weiterhin die Erkenntnis zugrunde, daß die Dektektion der Curie-Temperatur der Sensorsubstanz in einfacher Weise mit einem Differenzialtransformator besonderer Ausgestaltung durchführbar ist. Ein solcher Differenzialtransformator hat vorzugsweise die Form eines "H", wobei auf dem Querschenkel eine Erregerwicklung und auf mindestens einem Längsschenkel auf dem oberen und unteren Teil jeweils eine Sekundärwicklung aufgebracht sind. Der Spulenkern des Differenzialtransformators ist insgesamt symmetrisch aufgebaut, so daß der im Querschenkel durch die Erregerwicklung erzeugte magnetische Fluß sich gleichmäßig in die verschiedenen Teile der Längsschenkel ausbreitet. Die als einseitiges magnetisches Joch wirkende Sensorsubstanz beeinflußt oberhalb der Curie-Temperatur, also bei paramagnetischem Zustand, diese Symmetrie nicht oder allenfalls äußerst geringfügig. Unterhalb der Curie-Temperatur, also im ferromagnetischen Zustand, wird der magnetische Fluß auf der Seite des H-förmigen Spulenkernes stark erhöht, auf der die Sensorsubstanz relativ zum Spulenkern plaziert wurde. Somit ist über eine an die Sekundärwicklungen angeschlossene Auswerteeinheit das Überschreiten der Curie-Temperatur innerhalb der Sensorsubstanz sehr präzise feststellbar.

Um absolut Messungen des magnetischen Flusses und dessen Veränderungen zu vermeiden, sollten die Windungszahlen der Sekundärwicklungen auf den Längsschenkeln des H-förmigen Spulenkernes gleich sein. Somit müssen lediglich Abweichungen von einer Null-Lage detektiert werden.

Im folgenden wird die Erfindung anhand eines Ausführungsbeispieles näher erläutert. Die schematische Figur zeigt eine Vorrichtung zur Durchführung des erfindungsgemäßen Verfahrens.

Als Sensorsubstanz, die ein magnetisches Jochacht darstellt, kann beispielsweise eine Nickelschicht verwendet werden, deren Curie-Temperatur 368° C beträgt. Als Sensor zur Detektion der Curie-Temperatur kann ein Differenzialtransformator mit H-förmigem Feritkern 1 eingesetzt werden. Der Feritkern 1 besteht aus Längsschenkeln 3 und Querschenkel 2 mit Erregerwicklung 4 und Sekundärwicklungen 5 gleicher Windungszahl. Die Erregerwicklung 4 ist an einer Wechselspannungsquelle 13 angeschlossen. Die Verteilung des sich aufteilenden magnetischen Flusses 6 in die partiellen magnetischen Flüsse 7 ist bei paramagnetischem Zustand des magnetischen Joches 8 symmetrisch, d.h. die in den Sekundärwicklungen 5 induzierten Spannungen addieren sich zu Null. Bei ferromagnetischem Zustand des magnetischen Joches 8 liegt eine Unsymmetrie vor, die mittels einer Auswerteeinheit erfaßt wird. Die Auswerteeinheit besteht beispielsweise aus:
- Wechselspannungsverstärker (9)
- Hüllkurvendetektor (10)
- Tiefpaßfilter (11)
- Schwellwertschalter (12)
- Wechselspannungsquelle (13).

Es ist selbstverständlich, daß zum Laserlöten eine Lötstelle für den Laserstrahl direkt oder indirekt zugänglich sein muß. Falls die Temperaturführung in Form einer Regelung mit einer Temperaturmessung über die Infrarotemission der Lötstelle ausgeführt sein soll, muß zusätzlich das hierfür nötige Infrarot-Strahlungspyrometer auf die Lötstelle gerichtet werden können. Zur Verbesserung der Handhabung ist es zweckmäßig, wenn für den Laserstrahl und das Infrarot-Strahlungspyrometer die gleiche Blickrichtung gewählt wird. Dies ist durch den Einsatz eines wellenlängenabhängigen Teilungsspiegels möglich, wobei dieser Teilungsspiegel etwa unter 45° zur Blickrichtung angewinkelt ist. Dabei wird das seitlich einfallende Laserlicht in die Blickrichtung, also auf der Lötstelle reflektiert, während der Teilungsspiegel für die Infrarotwellenlänge, die von der Lötstelle emittiert und vom Infrarotstrahlungspyrometer detektiert werden soll, durchlässig ist. Der umgekehrte Fall, d.h. ein gerader Durchgang des Laserstrahles und ein seitliches Herausreflektieren der Infrarotemission ist ebenfalls möglich.

Die Aufheizung des Werkstückes erfolgt beispielsweise mit einem gepulsten Nd:YAG-Laser mit folgenden Daten:
- Pulsdauer 0,5 ms
- Pulsenergie 0,02 J
- Pulsfolgefrequenz 300 Hz
- mittlere Laserleistung 6 W
- Brennfleckdurchmesser 2,5 mm
- Erregerfrequenz des Differentialtransformators 3 kHz

Die Versuche wurden an vernickelten (Curie-Temperatur = 368° C) und anschließend verzinnten Werkstücken aus CuSn6-Streifen mit den Abmessungen von Breite : Dicke : Lotschichtdicke = 3 mm : 0,2 mm : 10 bis 500 µm durchgeführt. Das Licht des Nd:YAG-Lasers mit einer Wellenlänge von 1,06 µm wurde im Infrarot-Strahlungspyrometer durch einen Filter zur Vermeidung von Störlicht herausgefiltert. Die für das Infrarot-Strahlungspyrometer wichtigen Wellenlängen liegen oberhalb von 2 µm. Mit dieser Ausführung wurde die Lötstellentemperatur entweder auf die Curie-Temperatur der Nickelschicht oder bei zusätzlicher Verwendung des am Curiepunkt kalibrierten Infrarot-Strahlungspyrometers nach einem vorgegebenen Temperatur-Zeit-Verlauf geregelt.

Die Einkopplung des Laserlichtes kann entweder direkt in das Lot oder indirekt über die miteinander zu verlötenden Teile erfolgen. Das Überschreiten der Curie-Temperatur wird mittels der Sensorsubstanz und dem Differentialtransformator erfaßt und die Temperaturführung wird mittels eines Regelkreises durchgeführt, für den dieses Curie-Temperatur-Sensorsystem oder alternativ das am Curiepunkt kalibrierte Infrarot-Strahlungspyrometer den Istwert liefert. Dabei wird die Laserleistung entsprechend dem aktuell vorliegenden Ausgangssignal des Curie-Punktsensors auf die Curie-Temperatur der Sensorsubstanz bzw. anhand des Ausgangssignales des Infrarot-Strahlungspyrometers gemäß einer vorliegenden Solltemperaturkurve geregelt. Die Curie-Temperatur der Sensorsubstanz ist unabhängig vom Vorhandensein bestimmter minimaler Lotvolumina, von Schwankungen im Lotvolumen verschiedener hintereinander bearbeiteter Lötstellen oder von Oberflächeneigenschaften der Lötstellen.

Somit ist es möglich, das Erreichen der Curie-Temperatur exakt und schnell zu detektieren und auf bzw. oberhalb der Curie-Temperatur die Temperaturführung zu steuern oder zu regeln. Hierbei kommt eine entsprechend ausgelegte Hardware oder ein Rechner mit entsprechender Software zum Einsatz.

Die Schar von Eichkurven zur Kalibrierung des Infrarot-Strahlungspyrometers wird zuvor an einigen baugleichen, nur im Emissionsfaktor ε unterschiedlichen "Masterlötstellen" mit präzisen, aber zeitaufwendigeren Temperaturmeßverfahren ermittelt. Dabei wird zu einer Reihe von Lötstellentemperaturen jeweils das Ausgangssignal des Infrarot-Strahlungspyrometers festgehalten. Somit ergibt sich eine Schar von Eichkurven zu verschiedenen Emissionsfaktoren ε .

Die gesamten Messungen gehen davon aus, daß nach vollzogener Kalibrierung des Infrarot-Strahlungspyrometers keine Änderung des Emissionsfaktors ε mehr erfolgt. Die Erfahrung hat gezeigt, daß das flüssige Lot für längere Zeit, aber auf jeden Fall für die Bearbeitungszeit einen gleichbleibenden Emissionsfaktor ε hat.

Der gebräuchlichste Anwendungsfall eines erfindungsgemäßen Verfahrens ist die Temperatursteuerung an der Lötstelle bei bzw. oberhalb der Curie-Temperatur oder die Temperaturregelung in einem engen Toleranzbereich um die Curie-Temperatur herum bzw. bei zusätzlicher Verwendung eines Infrarot-Strahlungspyrometers nach einem vorgegebenen Temperatur-Zeit-Verlauf. Typische Arbeitstemperaturen beim Weichlöten liegen bei ca. 250°C. Eine derartige Temperatur kann durch das beschriebene Verfahren auf ± 10 °C genau eingestellt werden. Prinzipiell können Prozesse gesteuert oder geregelt werden, für die eine Sensorsubstanz mit einer geeigneten Curie-Temperatur zu Verfügung steht bzw. bei denen zusätzlich eine erfassbare und auswertbare Menge an Infrarot-Strahlung von der Prozeßstelle emittiert wird.

Der Temperaturbereich innerhalb dessen der magnetische Phasenübergang auftritt ist sehr schmal und liegt je nach Sensorsubstanz bei ca. 10 bis 20° C.

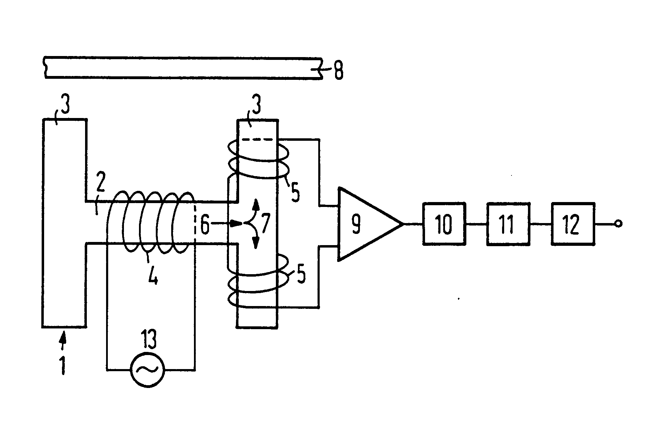

## Patentansprüche

1. Verfahren zur Führung des Temperaturverlaufes an Lötstellen beim Laserlöten mittels der Erfassung eines bekannten Temperaturfixpunktes,
**dadurch gekennzeichnet,**
daß als Temperaturfixpunkt die Curie-Temperatur einer zu einem Werkstück gehörenden oder in gutem thermischem Kontakt mit der Lötstelle stehenden Sensorsubstanz verwendet wird, wobei Lötstelle und angrenzende Sensorsubstanz annähernd die gleiche Temperatur aufweisen und das Erreichen der Curie-Temperatur in der Sensorsubstanz während des Lötens mittels eines Sensors zur Erkennung des damit verbundenen Überganges zwischen Ferro- und Para-Magnetismus festgestellt wird.

2. Verfahren nach Anspruch 1,
**dadurch gekennzeichnet,**
daß im Anschluß an das Erreichen der Curie-Temperatur der Sensorsubstanz eine vorgegebene Energiemenge mittels des Lasers nachgeliefert wird, um die Lötstelle auf eine bestimmte Arbeitstemperatur zu Erwärmen.

3. Verfahren nach Anspruch 1,
**dadurch gekennzeichnet,**
daß
- die bis zum Erreichen der Curie-Temperatur der Sensorsubstanz mittels des Lasers abgegebene Energiemenge ermittelt wird und
- eine daraus abgeleitete Energiemenge mittels des Lasers nachgeliefert wird, um die Lötstelle auf eine bestimmte Arbeitstemperatur zu erwärmen.

4. Verfahren nach Anspruch 1,
**dadurch gekennzeichnet,**
daß die Curie-Temperatur der Sensorsubstanz annähernd gleich der Löttemperatur ist, wobei nach Erreichen der Löttemperatur durch Regelung der Laserleistung mittels eines geschlossenen Regelkreises die Lötstellentemperatur für eine vorbestimmte Zeit bei der Curie-Temperatur gehalten wird.

5. Verfahren zur Durchführung einer Laserlötung nach einem der vorhergehenden Ansprüche,
**dadurch gekennzeichnet,**
daß ein symmetrischer H-förmiger Spulenkern (1) mit einer auf dessen Querschenkel (2) aufgebrachten Erregerwicklung (4) und zwei miteinander einseitig verbundenen Sekundärwicklungen um den oberen und unteren Teil eines oder beider Längsschenkel (3) zur Auswertung des Überganges zwischen Ferro- und Paramagnetismus in der Sensorsubstanz eingesetzt wird, wobei die Sensorsubstanz als einseitiges magnetisches Joch (8) wirkt und die Auswertung anhand der an den freien Enden der Sekundärwicklungen (5) anliegenden Signale geschieht.

6. Verfahren nach Anspruch 5,
**dadurch gekennzeichnet,**
daß für die Sekundärwicklungen (5) auf den Längsschenkeln (3) des H-förmigen Spulenkernes (1) die gleiche Windungszahl verwendet wird.

## Claims

1. Method for guiding the temperature variation at soldering points during laser soldering by means of detecting a known fixed temperature point, characterised in that use is made as the fixed temperature point of the Curie temperature of a sensor substance belonging to a workpiece or in good thermal contact with the soldering point, the soldering point and adjacent sensor substance having approximately the same temperature and the reaching of the Curie temperature in the sensor substance during soldering being determined by means of a sensor for detecting the transition bound up therewith between ferromagnetism and paramagnetism.

2. Method according to Claim 1, characterised in that following the reaching of the Curie temperature of the sensor substance a prescribed quantity of energy is additionally supplied by means of the laser in order to heat the soldering point to a specific working temperature.

3. Method according to Claim 1, characterised in that
- the quantity of energy dissipated by means of the laser up to the reaching of the Curie temperature of the sensor substance is determined, and
- a quantity of energy derived therefrom is additionally delivered by means of the laser in order to heat the soldering point to a specific working temperature.

4. Method according to Claim 1, characterised in that the Curie temperature of the sensor substance is approximately equal to the soldering temperature, the soldering point temperature being kept at the Curie temperature for a predetermined time after reaching of the soldering temperature by controlling the laser output by means of a closed control loop.

5. Method for carrying out laser soldering according to one of the preceding claims, characterised in that use is made for the purpose of evaluating the transition between ferromagnetism and paramagnetism in the sensor substance of a symmetrical H-shaped coil core (1) having an excitation winding (4) mounted on the transverse limb (2) thereof and two secondary windings, connected to one another at one end, around the upper and lower part of one or of the two longitudinal limbs (3), the sensor substance acting as a single-ended magnetic yoke (8) and the evaluation being performed with the aid of signals applied to the free ends of the secondary windings (5).

6. Method according to Claim 5, characterised in that the same number of turns per unit length is used for the secondary windings (5) on the longitudinal limbs (3) of the H-shaped coil core (1).

## Revendications

1. Procédé pour suivre la variation de température au niveau de zones de brasage lors du brasage par laser, moyennant la détection d'un point fixe connu de température, caractérisé par le fait qu'on utilise comme point fixe de température, la température de Curie d'une substance de détection qui fait partie d'une pièce à traiter ou est placée en bon contact thermique avec la zone de brasage, la zone de brasage et la substance de détection contiguë possédant approximativement la même température, et le moment où la température de Curie est atteinte dans la substance de détection pendant le brasage étant déterminée au moyen d'un capteur servant à identifier la transition, qui y est liée, entre le ferromagnétisme et le paramagnétisme.

2. Procédé suivant la revendication 1, caractérisé par le fait que, lorsque la substance de détection a atteint la température de Curie, une quantité d'énergie prédéterminée est fournie en plus à l'aide du laser afin de chauffer la zone de brasage à une température de travail déterminée.

3. Procédé suivant la revendication 1, caractérisé par le fait
- qu'il consiste à déterminer la quantité d'énergie, fournie en plus à l'aide du laser pour que la substance de détection atteigne la température de Curie, et
- qu'une quantité d'énergie, qui en est dérivée, est fournie en plus à l'aide du laser de manière à chauffer la zone de brasage à une température de travail déterminée.

4. Procédé suivant la revendication 1, caractérisé par le fait que la température de Curie de la substance de détection est approximativement égale à la température de brasage, auquel cas, une fois atteinte la température de brasage, la température de la zone de brasage est maintenue égale à la température de Curie pendant un intervalle de temps prédéterminé, par réglage de la puissance du laser au moyen d'un circuit de réglage fermé.

5. Procédé pour la mise en oeuvre d'un brasage par laser suivant l'une des revendications précédentes, caractérisé par le fait
qu'on met en oeuvre un corps de bobine symétrique en forme de H (1), qui est pourvu d'un enroulement d'excitation (4) monté sur ses branches transversales (2) et de deux enroulements secondaires reliés entre eux unilatéralement et disposés autour de la partie supérieure et de la partie inférieure d'une branche longitudinale ou des deux branches longitudinales (3) pour évaluer la transition entre le ferromagnétisme et le paramagnétisme dans la substance de détection, cette dernière agissant en tant que culasse magnétique unilatérale (8), l'évaluation s'effectuant sur la base des signaux appliqués aux extrémités libres des enroulements secondaires (5).

6. Procédé suivant la revendication 5, caractérisé par le fait que pour les enroulements secondaires (5) disposés sur les branches longitudinales (3) du noyau de bobine en forme de H (1), on utilise le même nombre de spires.
